# EUROPEAN PATENT SPECIFICATION

(11) **EP 1 042 238 B1**
(45) Date of publication and mention of the grant of the patent: **29.05.2002**
(21) Application number: 98965224.3
(22) Date of filing: 02.12.1998
(51) Int. Cl.: C03B 3/02, C03B 5/00, C03B 37/10, C03B 37/05

(54) **APPARATUS AND METHOD FOR THE PRODUCTION OF MAN-MADE VITREOUS FIBRES**
VERFAHREN UND VORRICHTUNG ZUM HERSTELLEN VON GLASARTIGEN KUNSTFASERN
PROCEDE ET APPAREIL DE PRODUCTION DE FIBRES VITREUSES

(30) Priority: 02.12.1997 EP 97309667
(43) Date of publication of application: 11.10.2000
(73) Proprietor: Rockwool International A/S, DK-2640 Hedehusene (DK)
(72) Inventor: JENSEN, Soren, Lund, DK-2840 Holte (DK); JENSEN, Leif, Moller, Valby St., DK-4000 Roskilde (DK)
(74) Representative: Samuels, Lucy Alice
(86) International application number: EP9807823
(87) International publication number: WO9928247

(56) References cited:
- WO-A-91/03435
- FR-A- 2 711 078
- US-A- 2 311 870
- US-A- 4 831 633
- US-A- 4 877 449

## Description

This invention relates to methods and apparatus for making man-made vitreous fibres (MMVF) utilising waste materials as part of the mineral material from which the fibres are made.

It is common practice to make MMV fibres by forming a melt from granular mineral material and then forming fibres from this melt, for instance by a centrifugal fibre forming process.

Various types of furnace are used for forming the melt, the choice depending upon, inter alia, the composition of the charge which is to be melted and the cost effectiveness of energy sources.

One type of furnace that is widely used, especially for making fibres from rock (including stone or slag) is a shaft furnace. In this, a stack of granular mineral material (eg crushed rock or briquettes) is heated and melt drains to the base of the stack. Volatiles can escape into the effluent gases as the granular material is heated and before it becomes molten. The heating of the granular material arises, at least in part, from combustion of gas or solid fuel in the furnace and so it is necessary to vent significant amounts of effluent gases from the furnace. These have to be treated to prevent environmental pollution.

Another type of furnace is a tank furnace, by which we include gas or oil fired tank furnaces, molybdenum and graphite electrode tank furnaces and electric arc furnaces. In each of these the mineral to be melted is added to a reservoir of melt contained in the tank and heat energy is applied, by electricity or combustion, sufficient to melt the added solid mineral. When heating is by combustion, the effluent gases from the tank furnace have to be treated to prevent pollution.

Irrespective of whether the furnace is a shaft furnace or a tank furnace it is common practice to form the melt from a mixture of materials and it is common practice to use by-products of other industrial processes as part of the mineral materials. For instance it is common to add various fly ash products or mineral wool waste as part of the mineral charge. The fly ash and other waste products which are customarily used have to be free of unacceptable volatile or other toxic components because existing procedures are such that the incorporation of such components in the charge would lead to unacceptable problems either in controlling the quality of the melt or in controlling the effluent from the process. For instance wastes containing significant amounts of zinc, mercury, lead, cadmium, fluorine, chlorine or sulphur, or organic or other compounds which during the furnace treatment could react to form toxic components such as dioxins, have previously had to be excluded from consideration for use as mineral in MMVF production.

Processes in which toxic wastes are utilised to provide part of the mineral charge which can then be made into mineral fibre are described in US-A-5,134,944 and US-A-5,496,392. However these are complex processes and do not provide a simple and efficient way of utilising the waste in the manufacture of MMV fibres.

In WO-A-91/03435, a process is described in which mineral wool scrap is melted in one furnace by combustion gases, and this melt is combined with the melt from another furnace to form a mixed melt from which MMV fibres are then formed. Melting the scrap separately from the main mineral charge avoids the need to convert the scrap into briquettes or granules, but this process is of no relevance to the more serious problem of using a scrap which from time to time may be contaminated with volatile or toxic compounds.

In US-A-2,311,870, the chemical content of a final melt is achieved by blending appropriate proportions of melts from two different furnaces, each containing a different charge, and additional solid material can then be added to the blended melt, while applying further combustion heating to maintain the desired melt temperature. Again, this does not help solve the problems that are encountered when the waste may from time to time contain volatile or other toxic components.

FR-A-2711078 discloses a process for treating waste, materials by melting them to form a vitreous matrix in order to immobilise the waste.

It would be desirable to provide a system for making MMV fibres from a charge which can include waste materials which can contain toxic or volatile components from time to time without causing undesirable consequences in the fibres or in the environment.

According to the invention, we provide a process for making man-made vitreous fibres comprising providing a fibre-forming mineral melt from primary granular mineral material and waste mineral material and forming fibres from the fibre-forming melt, wherein
the primary granular mineral material is melted in a primary furnace whereby a primary melt is formed in the primary furnace,
the waste (or secondary) material is melted in a separate waste furnace which is an electric furnace or a plasma torch furnace, whereby waste melt is formed in the waste furnace, and
the primary and waste melts are blended to form the fibre-forming mineral melt.

Thus, in the invention, the waste granular material is melted in a separate furnace from the furnace in which the remainder of the granular mineral material is melted and the waste furnace is an electric or plasma arc furnace, thereby minimising effluent gases from the waste.

As a result of melting the primary material in one furnace and the waste material in another, it is now possible to optimise the conditions for each, whereas if they are all melted in a single furnace then it is necessary to use a compromise which generally is not optimum either for the primary material or for the waste material.

As one example, some wastes require the application of higher energy or temperature conditions than are required for optimum melting of the primary mineral material. As a result of melting them in separate furnaces, the conditions in each can be selected to be optimum for that particular material. For instance, if it is necessary to heat the waste material to a higher temperature, for instance in order to destroy or drive off toxic or volatile materials, this can now be done without having to heat the entire charge to this temperature.

As another example, waste which is used from time to time (or more frequently) may contain toxic or volatile materials such that special precautions have to be taken as regards the handling of effluent gases from such wastes. As a result of melting the primary material and the waste in separate furnaces it is possible to concentrate the special precautions more effectively on the effluent from the waste. Further, the furnace for the waste is heated by sources of energy that do not themselves generate large amounts of combustion or other effluent gases. Thus, although the primary furnace may generate large amounts of conventional combustion effluent gases, the waste furnace is preferably an electric furnace so as to eliminate or minimise the amount of combustion gases that are mixed with the effluent from the waste furnace. Instead of using an electric furnace, a plasma arc furnace can be used as the waste furnace as the amount of gases associated with the plasma arc can be relatively low.

As a result of preventing admixture of any toxic or volatile effluent from the waste furnace with the volumes of combustion gases that are normally required for melting a mineral charge, it is possible to control and collect the effluent much more efficiently and thereby prevent its escape into the environment.

The control of the effluent can comprise merely collection by scrubbing or otherwise of undesirable components and dumping the collected materials, or the process can be conducted under conditions such that the effluent gas from the secondary, waste, furnace may have a sufficiently high concentration of one or more of them that efficient recovery is facilitated. Indeed, the recovery can be so efficient that the volatile or other toxic materials may be recovered from the effluent in a form such that the recovered material can then be used as a source of the material in other industrial processes. For instance heavy metals can be usefully recovered from the effluent gases from a waste furnace provided those gases are not diluted with a large amount of effluent gases from the melting of product containing little or no heavy metal.

Further, as a result of melting the waste in a separate furnace, it is possible to select conditions which promote the fixing of the toxic or volatile materials in the melt, for instance in the silicate lattice of the melt, in preference to being volatilised off from the melt. For instance oxidising conditions can be maintained in the waste furnace so as to promote the dissolution of iron and copper into the melt and to minimise or prevent the separation of iron or copper which is likely to occur under reducing conditions. Instead of or in addition to controlling the melting conditions, oxygen or other oxidising gas can be blown through the waste melt or blend melt in order to achieve the desired oxidised state in the melt, so as to minimise the separation of iron or copper. This blowing of oxygen can be conducted solely on the waste melt or on a blend of the waste and primary melts.

Additionally or alternatively, if they are volatilised off from the melt they may be recovered from the effluent gases and may be recycled into the mineral material in the waste furnace or, in some instances, even in the primary furnace, since this recycling promotes the amount of the relevant material which is fixed into the silicate lattice or otherwise retained in the melt.

The chemical analysis of either or both of the melts may be monitored in-line continuously or occasionally (e.g., by Laser Plasma Spectroscopy, Laser Induced Breakdown Spectroscopy or X-Ray Fluorescence) and if the analysis deviates from a desired value it is then possible to modify that melt by adding a modifying material to that melt without having to modify the other melt. For instance, if the waste furnace generates a melt having a chemical analysis such that it is deficient in, for instance, one element, solid additive powdered material having a high (above 20 or 40%) concentration of that element can be added to the waste, usually either immediately above the melt (so that it is carried down into it) or direct into the melt. For instance it can be screw fed, often in the form of powder, onto the melt or to beneath the melt or the powdered material can be blown into the furnace just above the melt while entrained in air or other gas or using lances that discharge beneath the surface of the melt a mixture of the material and gas. For instance if the melt contains less aluminium than is required, bauxite or other high (above 20% or 40%) aluminium compound can be injected as powder.

The need to modify the melt chemically generally arises primarily in the waste melt because of the potentially variable nature of the waste, but if desired the chemical addition can additionally or alternatively be to the primary melt. The addition of a chemical additive to compensate for deficiencies in the analysis can be conducted automatically in response to the analysis or it can be conducted manually.

Similarly, the temperature of one of the melts can be monitored, for instance by a radiation pyrometer or a heat stable, non-corrodible, thermosensor and the temperature of the melt may be adjusted in response to that. This may be achieved by applying heating or cooling.

These various modifications of the chemical analysis, the reduction or oxidation state or the temperature of the melt are usually applied to the waste melt when that is formed independently or to the blended melt, but if desired they can additionally or alternatively be applied to the primary melt.

The primary and waste melts may be blended in one of the furnaces or in a separate chamber. For instance the primary melt and waste melt may each be individually led from their respective furnaces to a mixing zone in which they are mixed, prior to the mixed melt being used for the formation of MMV fibres. For instance each of the melts may be run to a trough through which the melts flow while becoming mixed, but more usually the melts may each be fed to a chamber in which they are mixed, and from which the mixed melt is fed to the MMVF production stage.

In another process, the waste melt is led from the waste furnace into the primary furnace, where it becomes mixed with the primary melt to form a mixed melt which is then used for MMVF production.

In the preferred process, the primary melt is led from the primary furnace to the waste furnace where it is mixed with the waste melt to form the mixed melt which is then used for MMVF production, optionally after oxidation, reduction or other chemical modification.

The primary furnace can be any type of furnace which is suitable for melting granular mineral material for providing a melt for forming fibres. Accordingly it can be, for instance, a tank furnace by which we include gas or oil fired tank furnaces, molybdenum or graphite electrode tank furnaces and electric arc furnaces. Preferably it is a shaft furnace heated by combustion of gas or solid fuel. Preferably the primary furnace is a cupola.

The heating of the secondary furnace is preferably electrical so as to avoid the formation of combustion gases which mix with any effluent gases associated with the melting of the waste. However heating the secondary furnace by plasma torch can be satisfactory as the volume of gases associated with the plasma torch, and this mixing with any effluent gases, can be satisfactorily low.

In one embodiment of the invention, the primary melt from a cupola or other shaft furnace and the waste melt from an electrically heated or plasma torch waste furnace are run into and blended in a mixing chamber to form the desired fibre-forming mineral melt. The mixing chamber can be heated by combustion of, for instance gas or by plasma torch or by electric heating, but often heating is unnecessary.

In another preferred embodiment of the invention, the primary melt accumulates as a pool in the base of the shaft furnace (for instance as is conventional in the cupola) and the waste melt is formed in a separate (usually electric) furnace and is blended into the pool of primary melt in the primary furnace.

In this embodiment, the primary and waste furnaces may be separated from one another. Whenever melt is being fed into a furnace the pressures inside and outside the furnace must be such as to allow the melt to enter into the furnace. For instance if melt is being fed into the base of a shaft furnace (which necessarily operates under a positive pressure) a sufficient head of waste melt must be created at the point where the waste melt is being fed into the furnace in order to ensure that the waste melt does in fact flow into the furnace. For instance when, as is normal, the waste melt is fed into the shaft furnace near the base of the furnace, it may be fed in through a reverse funnel the top of which is higher than the position at which the mixed melt is drained off from the furnace to the MMVF production process.

In a preferred embodiment, the melt in the primary furnace is drained out of the primary furnace into the waste furnace and the waste is melted by being heated in the waste furnace. For instance the primary furnace may be a dry bottomed cupola which may discharge its melt into a separate furnace which is generally under the same pressure as the primary furnace. This separate furnace can be, for instance, a melt iron separator. That is to say, it can be a chamber into which all the melt flows and in which any molten iron settles to the base (and is tapped off) while the remainder of the melt overflows from the separator and is run to the fibre forming apparatus.

In this embodiment, the waste furnace generally consists of this melt iron separator or other vessel into which the melt from the primary furnace is run. Usually the waste material is fed down onto the melt in this vessel and is simultaneously melted and blended with the primary melt by electrical (or plasma torch) heating. If desired some of the waste can be blown into the waste furnace but this, and all methods that result in increasing the flow of gas in contact with the waste, can have the disadvantage of increasing the total volume of effluent gases and so may necessitate extra effluent treatment to clean the effluent before discharge to the atmosphere.

The primary granular mineral material which is used in the processes of the invention can be any mineral materials conventionally used for forming MMVF products. They can be virgin or recycled MMVF products or waste materials from other processes but should preferably be substantially free (below 0.1% and usually below 0.01% and usually substantially zero ppm) of components such as cadmium, mercury, lead, zinc, sulphur and halogen or toxic organics. The material is in conventional granular form, the size of the granules being selected according to the nature of the furnace. For instance when the furnace is a tank furnace, the granular size is usually up to about 25mm, whilst if the furnace is a cupola or other shaft furnace the granular size is usually larger, usually above 50mm for crushed rock or briquettes.

The waste mineral materials which are treated in the waste furnace in the processes of the invention can be contaminated by materials that would normally be unacceptable for use as a charge for making MMVF melt. However an advantage of the invention is that the process design gives satisfactory results despite variations in the waste and thus the process can be conducted using variable waste which, for some of the time, may be substantially free of undesirable contamination but which does contain undesirable contamination from time to time. This undesirable contamination can be, for instance, a content of above 0.1% or more usually 0.2 or 0.3% halogen or even lower amounts of organic toxic compounds or elements such as mercury, lead, zinc or cadmium, for instance in amounts above 0.01% and often above 0.1%.

Suitable wastes that can be used in the invention include slags from the metallurgical industry, especially steelmaking slags such as converter slags or EAF slags, and slags from the ferro-alloy industry such as ferro chromium, ferro-manganese or ferro-silica slags; slags and residues from the primary production of aluminium such as spent aluminium pot lining or red mud, dried or wet sludge from the paper industry; sewage sludge; melasse; bleaching clay; residues from the incineration of household and industrial wastes, especially slags or filter ashes from the incineration of municipal solid wastes; glass waste (or slags) from the vitrification of other waste products; glass cutlets; waste products from the mining industry, especially minestone from the excavation of coal; residues from the incineration of fossil fuel, especially from the combustion of coke at power plants; spent abrasive sand; spent moulding sand from iron and steel casting; waste sieving sand; glass reinforced plastic; and fines and breakage waste from the ceramic and brick industry. Toxic virgin rock can also be used as waste. Other suitable wastes include those from the secondary production of aluminium, which are often generically described as "aluminium dross" or "aluminium oxide dross". In particular waste materials can be used which contain 0.5 to 10 wt.%, preferably 2 to 6 wt.%, more preferably below 5 wt.%, metallic aluminium, and 50 to 90 wt.%, preferably below 85 wt.%, more preferably 60 to 72 wt.%, alumina Al₂O₃. Wastes from the aluminium casting process are particularly useful. This process provides one specific alumina-rich waste material which is described in the industry as "aludross". This tends to contain significant proportions of metallic aluminium and is thus treated in order to retrieve the metallic aluminium. The alu dross is generally crushed, milled and sieved. This produces some aluminium for resale and an aluminium-rich fraction which is sent to a furnace for reuse. As a by-product an alumina-rich powder is also produced, described as "crushed alu-dross". The aluminium-rich fraction, optionally together with other aluminium-containing waste materials, is subjected to remelting in a furnace. This may be a rotating furnace or kiln. The aluminium waste may be subjected to plasma heating. A conventional furnace may also be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, described as "treated aluminium salt slag". Materials of this type are described for inclusion in briquettes in our publication number WO-A-99/28252 and reference should be made to that.

The proportion of primary materials to waste materials is generally in the range 20:1 to 1:1, for instance 5:1 to 2:1 (by weight).

The primary and waste materials may be selected to provide a final blended melt, and thus the fibres, with whatever composition analysis is required. The process may be controlled in-line as described in our publication number WO-A-99/28251. The MMV fibres may have analysis typical of conventional glass, rock, slag or stone wool fibres. However the invention is of particular value for the production of high aluminium fibres in which event it is desirable to include as part or all of the charge a high aluminium source such as Gehlenite, Sillimanite, Kyanite, Andalusite or Bauxite, usually in the primary furnace, and/or a high aluminium waste material such as slags and residues from the primary or secondary production of aluminium (eg as discussed above). High aluminium raw material, such as bauxite or any of the clays mentioned above, can be added to the waste or blended melts or to the primary furnace, for instance by injection into the melt in the primary furnace or by injection into the furnace just above the melt, for instance as described in our publication number WO-A-99/28249.

Suitable high aluminium, biologically soluble, fibres which can advantageously be made in the present invention are described in WO-96/14454 and WO-A-96/14274. Others are described in WO-A-97/29057, DE-U-2,970,027 and WO-A-97/30002. Reference should be made to each of these. In general the fibres and the melt from which they are formed have an analysis (measured as % by weight of oxides) within the various ranges defined by the following normal and preferred lower and upper limits:
SiO₂ at least 30, 32, 35 or 37; not more than 51, 48, 45 or 43
Al₂O₃ at least 14, 15, 16 or 18; not more than 35, 30, 26 or 23
CaO at least 2, 8 or 10; not more than 30, 25 or 20
MgO zero or at least 2 or 5; not more than 25, 20 or 15
FeO (including Fe₂O₃) 0, at least 2, 5; not more than 15, 12 or 10
FeO + MgO at least 10, 12, 15; not more than 30, 25, 20
Na₂O + K₂O zero or at least 1; not more than 19, 14, 10
CaO + Na₂O + K₂O at least 10, 15; not more than 30, 25
TiO₂ zero or at least 1; not more than 6, 4, 2
TiO₂ + FeO at least 4, 6; not more than 18, 12
B₂O₃ zero or at least 1; not more than 5, 3
P₂O₅ zero or at least 1; not more than 8, 5
Others zero or at least 1; not more than 8, 5

The fibres preferably have a sintering temperature above 800°C, more preferably above 1000°C.

The melt preferably has a viscosity at fibre forming temperature of 5 to 100 poise, more preferably 10 to 70 poise at 1400°C.

The fibres preferably have an adequate solubility in lung fluids as shown by in vivo tests or in vitro tests, typically conducted in physiological saline buffered to about pH 4.5. Suitable solubilities are described in WO-A-96/14454. Usually the rate of dissolution is at least 10 or 20nm per day in that saline.

The preferred fibres which are made in the invention have an analysis which contains at least 15%, usually at least 17% and most usually at least 18% Al₂O₃, e.g., up to 30, 35 or 40%.

The MMV fibres may be made from the fibre forming mineral melt in conventional manner. Generally they are made by a centrifugal fibre forming process. For instance the fibres may be formed by a spinning cup process in which the melt is thrown outwardly through perforations in a spinning cup, or melt may be thrown off a rotating disc and fibre formation may be promoted by blasting jets of gas through the melt, or fibre formation may be conducted by pouring the melt onto the first rotor in a cascade spinner. Preferably the melt is poured onto the first of a set of two, three or four rotors each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The invention includes both the novel process and the arrangement of furnaces and other apparatus useful for carrying out the process.

Thus according to a second aspect of the invention there is provided an apparatus for the formation of man-made vitreous fibres comprising
(a) a primary furnace (1) in which primary granular material may be melted to form a primary melt,
(b) a separate waste furnace (24) in which waste mineral material may be melted to form a waste melt,
(c) means for blending the primary melt and waste melt and
(d) means for forming the blended melt into fibres and characterised in that the separate waste furnace is an electric or plasma torch furnace.

The following drawings and description illustrate arrangements of apparatus suitable for use in the process. In these drawings
Figure 1 is a diagrammatic representation of the apparatus for a process where the waste melt is blended with the primary melt in the primary furnace and
Figures 2 and 3 show two different arrangements in which the primary melt is blended with the waste melt in the waste furnace.

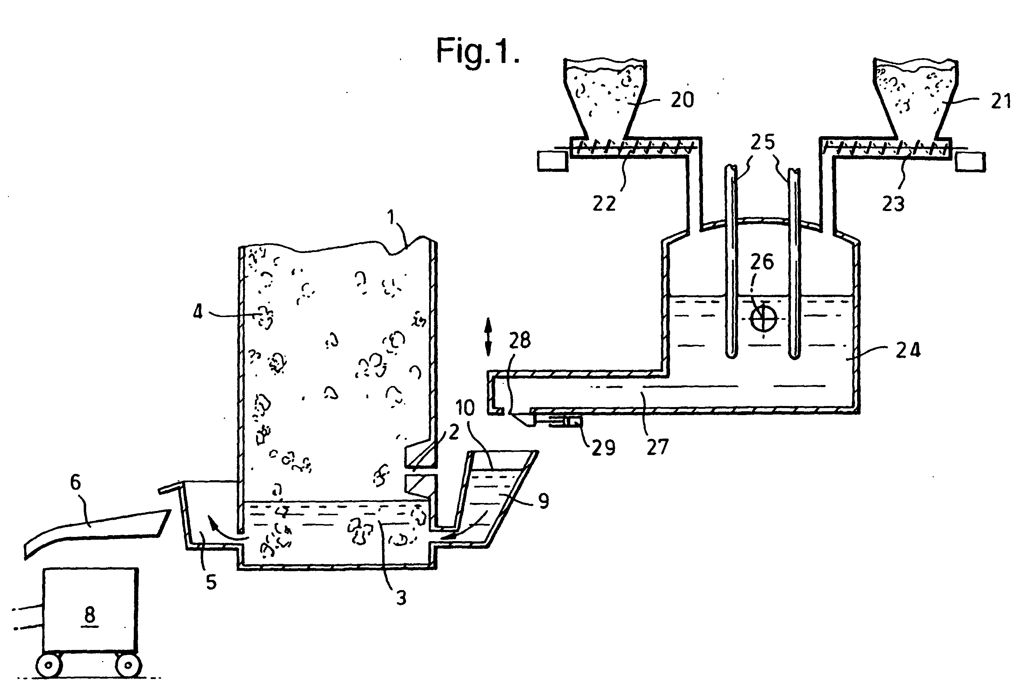

Referring to Figure 1, cupola furnace 1 is provided with tuyeres 2 just above its base above the position where liquid melt 3 accumulates. This melt is formed by melting of a stack 4 of mineral charge containing carbonaceous material which is burnt by oxygen injected through the tuyeres. The furnace has a conventional syphon outlet 5 leading to a melt gutter 6 by which the melt is discharged on to the first rotor 7 of a cascade of rotors in a centrifugal spinning apparatus 8.

Waste bins 20 and 21 are provided with individual screw conveyors 22 and 23 which can independently charge selected amounts of waste to a waste furnace 24 provided with electrodes 25 for heating and melting the waste in the furnace 24.

The furnace is tiltable about a horizontal axis 26 whereby melt can be discharged through an outlet melt passage 27 to an opening 28 which is controllable by a valve 29. The opening 28 discharges into an inlet syphon 9. By control of the tilting of the furnace 24 and the adjustment of the valve 29 it is possible to control the level 10 of the melt in the inlet 9 to a position which is sufficiently high to ensure the flow of melt through the inlet 9 into the melt pool 3 in the base of the cupola 1. Usually the melt valve 29 is kept permanently open and melt is caused to flow from the furnace 24 into the inlet 9 solely as a result of appropriate tilting of the furnace 24.

The melt in the furnace 24 can be subjected to continuous or occasional chemical analysis, as discussed above, and the conveyors 22 and 23 can be adjusted in response to this analysis so as to provide the melt with the desired composition. Oxygen can be blown through the melt in the furnace 24 if required in order to promote oxidation of elements such as copper and iron into the melt.

If either or both of the wastes 20 and 21 do not, in combination, give a waste melt having a sufficiently high content of, for instance, aluminium, and if the charge 4 in the cupola furnace 1 also does not provide sufficient aluminium, bauxite or other high aluminium powder may be added to the melt in the furnace 24 or it may be blown in through the tuyeres 2.

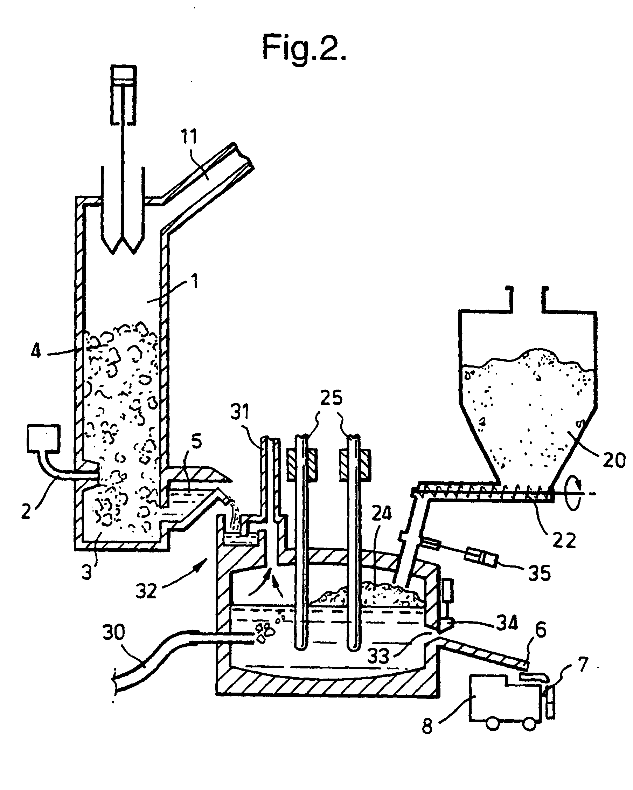

In the apparatus shown in Figure 2, the cupola furnace 1 discharges melt from its melt pool 3 through its syphon outlet 5 into a waste furnace 24 into which waste is fed from a waste bin 20 and which is provided with electrodes 25 for electric melting of the waste in the furnace 24. A gas injection lance 30 is provided for blowing oxygen into the melt 24 when required to oxidise the melt, and a flue gas outlet 31 is provided to allow venting of the resultant effluent gas.

Primary melt from the furnace 1 is fed into the waste furnace 24 through an air lock inlet 32.

Blended primary and waste melt is discharged from the furnace 24 through the outlet 33 controlled by a melt valve 34, and flows through gutters 6 on to wheel 7 of centrifugal spinning apparatus 8.

The melt can be analysed, for instance as it flows along the trough 6, and material may be injected through the gas injection plants in order to change the composition of the melt if required. Additionally or alternatively material may be added through the tuyeres 2 or it may be introduced in a similar manner to the waste, on to the top of the melt in the furnace 24.

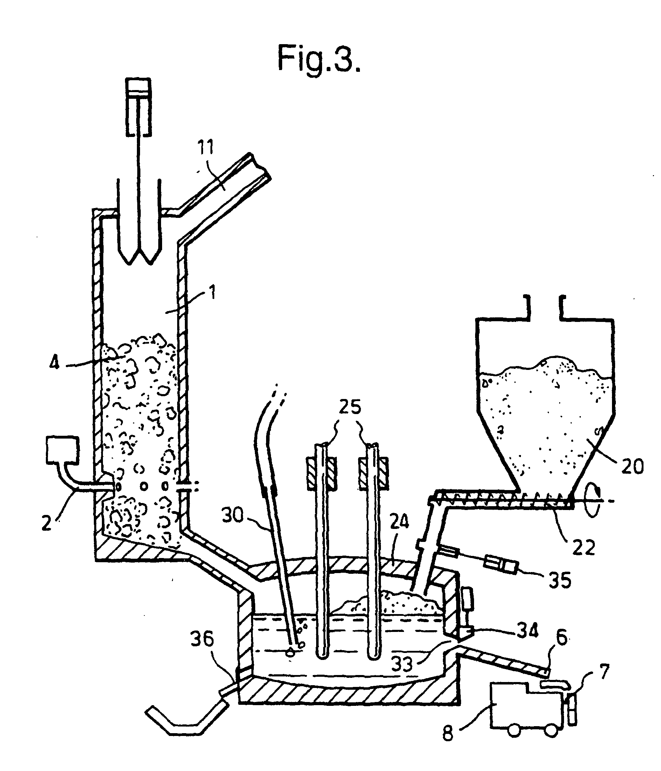

The apparatus shown in Figure 3 is generally similar except that the cupola furnace discharges direct into the waste furnace 24, as a result of which that furnace is operated at a higher pressure and so it is necessary to put a gas lock 35 in the feed from the waste screw 22. Also, since the chamber is more likely to be operating under reducing conditions (unless continuous oxygen injection is conducted through the lance 30) an iron tapping point 36 may be provided to allow molten iron to be tapped from the furnace when necessary.

It will be appreciated that in each of the apparatus shown in Figures 1 to 3, the vast majority of the effluent gases will be discharged up the cupola furnace 1. In the apparatus shown in Figure 2, the effluent gas through outlet 11 consists only of the effluent gases in the cupola, with any minor effluent gas from furnace 24 being taken off through the effluent gas outlet 31. This permits separate treatment of the effluent gases through the outlets 11 and 31, which can be convenient if the effluent from the furnace 24 contains volatile and relatively toxic materials. However in the apparatus shown in Figure 3, all the effluent, from both the furnaces, will leave through the gas outlet 11.

The following is an example :
Charge into cupola furnace:
   3850 kg/h diabase
   1050 kg/h slag from production of ferro-chromium alloy

With a loss on ignition of 4% this provides 0,96 (3850 + 1050) = 4700 kg of melt per hour from the cupola furnace.

In an electric waste melting furnace we charge:
900 kg/h mineral wool waste
50 kg/h aluminium dross from the secondary melting of aluminium (treated alumnium salt slag)
450 kg/h converter slag from production of steel
900 kg/h filter ash from the incineration of municipal solid waste

The charge blend is melted continuously and mixed with the melt coming from the cupola furnace. The melt blend is poured onto a cascade spinner to form mineral fibres of the following chemical composition:

| | |
|---|---|
| SiO₂ | 41.1 % |
| Al₂O₃ | 20.0 % |
| TiO₂ | 1.7 % |
| FeO | 7.3 % |
| CaO | 12.9 % |
| MgO | 12.6 % |
| NaO₂ | 2.1 % |
| K₂O | 1.2 % |
| F+C₁ | 0.5 % |
| Others: | 0.6 % |

Both the aluminium dross and the fly ash from the waste incineration contain considerable amounts of toxic components fluorine, chlorine, zinc and lead. The combined input is:

| | Charged Amount (Kg/h) | F (kg/h) | Cl (kg/h) | Pb (kg/h) | Zn (kg/h |
|---|---|---|---|---|---|
| Diabase | 3850 | - | - | - | - |
| Ferrochromium slag | 1050 | - | - | - | - |
| Production waste | 630 | 2 | - | - | - |
| Aluminium dross | 525 | 12 | 2 | 2 | 2 |
| Converter slag | 315 | 4 | - | - | - |
| MSW fly ash | 630 | 1 | 50 | 5 | 16 |
| TOTAL | 7000 | 19 | 52 | 7 | 18 |

By confirming this input to the separate waste melting furnace the effluence of fluorine, chlorine, zinc, lead and other volatile components to the flue gas and the filters is minimised.

## Claims

1. A process for forming man-made vitreous fibres comprising providing a fibre-forming mineral melt from primary granular mineral material and waste mineral material and forming fibres from the fibre-forming mineral melt,
wherein the primary granular mineral material is melted in a primary furnace (1) whereby a primary melt is formed in the primary furnace,
the waste material is melted in a separate waste furnace (24), whereby waste melt is formed in the waste furnace
and the primary and waste melts are blended to form the fibre-forming blended melt,
**characterised in that** the separate waste furnace is an electric or plasma torch furnace.

2. A process according to claim 1 in which an oxidising gas is blown through the waste melt or blended melt, and/or solid additives are added to the waste melt or blended melt.

3. A process according to claim 1 or claim 2 in which the primary furnace is a shaft furnace and a stack of the primary particulate mineral material is melted by being heated by combustion of gas or solid fuel in the shaft furnace.

4. A process according to claim 3 in which the shaft furnace is a cupola in which heating of the primary particulate material is provided by combustion within the cupola.

5. A process according to any preceding claim in which melt from the primary furnace and melt from the waste furnace are both run into and are blended in a mixing chamber.

6. A process according to any of claims 1 to 4 in which the primary melt accumulates as a pool in the base of the primary furnace and the waste melt is blended into this pool.

7. A process according to any of claims 1 to 4 in which the primary melt drains into the waste furnace, and the particulate waste material is melted by being heated in the waste furnace whereby a fibre-forming mineral melt is formed which is a blend of primary and waste materials.

8. A process according to any preceding claim in which the waste furnace is an electric furnace.

9. A process according to any preceding claim in which the blended melt and the fibres contain at least 15%, usually at least 18%, alumina.

10. A process according to claim 9 in which a powdered high alumina material is added to the waste melt or the blended melt or the primary melt.

11. Apparatus for the formation of man-made vitreous fibres comprising
(a) a primary furnace (1) in which primary granular material may be melted to form a primary melt,
(b) a separate waste furnace (24) in which waste mineral material may be melted to form a waste melt,
(c) means for blending the primary melt and waste melt and
(d) means for forming the blended melt into fibres and **characterised in that** the separate waste furnace is an electric or plasma torch furnace.

## Patentansprüche

1. Verfahren zur Bildung von künstlichen glasartigen Fasern umfassend das Bereitstellen einer faserbildenden mineralischen Schmelze aus granulärem mineralischem Primärmaterial und mineralischem Abfallmaterial und das Bilden von Fasern aus der faserbildenden mineralischen Schmelze, worin
das granuläre mineralische Primärmaterial in einem Primärofen (1) geschmolzen wird, wodurch in dem Primärofen eine Primärschmelze gebildet wird,
das Abfallmaterial in einem gesonderten Ofen für den Abfall (24) geschmolzen wird, wodurch in dem Ofen für den Abfall eine Abfallschmelze gebildet wird,
und die Primärschmelze und die Abfallschmelze unter Bildung eines faserbildenden Schmelzgemischs gemischt werden,
**dadurch gekennzeichnet, daß** der gesonderte Ofen für den Abfall ein Elektroofen oder ein Plasmabrennerofen ist.

2. Verfahren nach Anspruch 1, in welchem ein oxidierendes Gas durch die Abfallschmelze oder das Schmelzgemisch geblasen wird und/oder feste Additive zur Abfallschmelze oder zum Schmelzgemisch gegeben werden.

3. Verfahren nach Anspruch 1 oder Anspruch 2, in welchem der Primärofen ein Schachtofen ist und eine Schichtung des teilchenförmigen mineralischen Primärmaterials durch Erwärmen durch Verbrennung von Gas oder einem festen Brennstoff im Schachtofen geschmolzen wird.

4. Verfahren nach Anspruch 3, in welchem der Schachtofen ein Kupolofen ist, in welchem das Erwärmen des teilchenförmigen Primärmaterials durch Verbrennung im Kupolofen bereitgestellt wird.

5. Verfahren nach irgendeinem vorhergehenden Anspruch, in welchem Schmelze aus dem Primärofen und Schmelze aus dem Ofen für den Abfall beide in eine Mischkammer geleitet und dort gemischt werden.

6. Verfahren nach irgendeinem der Ansprüche 1 bis 4, in welchem die Primärschmelze sich am Boden des Primärofens als Sumpf anreichert und die Abfallschmelze in diesen Sumpf gemischt wird.

7. Verfahren nach irgendeinem der Ansprüche 1 bis 4, in welchem die Primärschmelze in den Ofen für den Abfall abfließt und das teilchenförmige Abfallmaterial durch Erwärmen im Ofen für den Abfall geschmolzen wird, wodurch eine faserbildende mineralische Schmelze gebildet wird, die ein Gemisch von Primär- und Abfallmateralien darstellt.

8. Verfahren nach irgendeinem vorhergehenden Anspruch, in welchem der Ofen für den Abfall ein Elektroofen ist.

9. Verfahren nach irgendeinem vorhergehenden Anspruch, in welchem das Schmelzgemisch und die Fasern mindestens 15%, gewöhnlich mindestens 18%, Aluminiumoxid enthalten.

10. Verfahren nach Anspruch 9, in welchem ein pulverförmiges Material mit hohem Aluminiumoxidgehalt zur Abfallschmelze oder zum Schmelzgemisch oder zur Primärschmelze gegeben wird.

11. Vorrichtung zur Bildung von künstlichen glasartigen Fasern umfassend
(a) einen Primärofen (1), in welchem granuläres Primärmaterial unter Bildung einer Primärschmelze geschmolzen werden kann,
(b) einen gesonderten Ofen für Abfall (24), in welchem mineralisches Abfallmaterial unter Bildung einer Abfallschmelze geschmolzen werden kann,
(c) eine Einrichtung zum Mischen der Primärschmelze und der Abfallschmelze und
(d) eine Einrichtung zum Bilden von Fasern aus dem Schmelzgemisch,
**dadurch gekennzeichnet, daß** der gesonderte Ofen für den Abfall ein Elektroofen oder ein Plasmabrennerofen ist.

## Revendications

1. Procédé de fabrication de fibres vitreuses faites à
la main, produisant un melt minéral formant des fibres à partir d'un matériau minéral granulaire primaire et d'un matériau minéral de rebut, et formant des fibres, à partir du melt minéral de formage des fibres.
dans lequel le matériau minéral granulaire primaire est fondu dans un four primaire (1), avec production d'un melt primaire dans le four primaire,
le matériau de rebut est fondu dans un four de rebut séparé (24), le melt de résidus étant produit dans le four à rebut,
et les melts primaire et de rebut sont mélangés pour réaliser le melt de mélange destiné à la formation des fibres,
**caractérisé en ce que** le four à rebuts séparé est un four torche électrique à plasma.

2. Procédé selon la revendication 1, dans lequel un gaz oxydant est soufflé travers le melt de résidus ou le melt de mélange, et/ou des additifs solides ont été ajoutés au melt de résidus ou au melt de mélange.

3. Procédé selon la revendication 1 ou 2, dans lequel le four primaire est un four à arbre, et un empilage de matériau primaire minéral particulaire est mélangé par réchauffage à combustion de gaz ou de fuel solide dans le four à arbre.

4. Procédé selon la revendication 3, dans lequel le four à arbre est une coupole, le chauffage étant réalisé par combustion du matériau primaire particulaire à l'intérieur de la coupole.

5. Procédé selon l'une des revendication précédentes, dans lequel le melt du four primaire et celui du four à résidus sont tous les deux mélangés dans une chambre de mélange.

6. Procédé selon lune des revendications 1 à 4, dans lequel le melt primaire s'accumule comme une concentration à la base du four primaire et le melt de résidus se mélange dans cette concentration.

7. Procédé selon l'une des revendications 1 à 4, dans lequel le melt primaire est évacué dans le four à résidus et le matériau de résidus particulaire se mélange au cours de son chauffage dans le four à résidus, constituant alors un melt minéral de formation des fibres en tant que mélange des matériaux primaires et des matériaux de résidus.

8. Procédé selon l'une des revendications précédentes, dans lequel le four à résidus est un four électrique.

9. Procédé selon la revendication 1, dans lequel le melt de mélange et les fibres contiennent 15% au moins, 18% en général, d'alumine.

10. Procédé selon la revendication 9, dans lequel est ajouté au melt de résidus ou au melt de mélange ou au melt primaire, un matériau en poudre à haute teneur en alumine.

11. Appareil pour la production manuelle de fibres vitreuses comprenant :
(a)un four primaire (1) dans lequel peut être fondu un matériau granulé primaire pour former un melt primaire,
(b)un four à résidus séparé (24) dans lequel peut être fondu un matériau minéral de résidus pour constituer un melt de résidus
(c) Des moyens pour mélanger le melt primaire et le melt de résidus et
(d)les moyens pour transformer le melt de mélange en fibres et **caractérisé en ce que** le four à résidus séparé est un four électrique ou un four torche à plasma.
